Europäisches Patentamt

European Patent Office

Office européen des brevets

(19)

(11) Publication number: **0 181 715**

A1

# EUROPEAN PATENT APPLICATION

(12)

(21) Application number: 85307573.7

(22) Date of filing: 21.10.85

(51) Int. Cl.⁴: **G 09 B 1/06**
**G 09 F 7/02**

(30) Priority: 22.10.84 ZW 16984

(43) Date of publication of application:
21.05.86 Bulletin 86/21

(84) Designated Contracting States:
AT BE CH DE FR GB IT LI LU NL SE

(71) Applicant: Yule, Noel Ivor
51 Ridge Road
Avondale Harare(ZW)

(72) Inventor: Yule, Noel Ivor
51 Ridge Road
Avondale Harare(ZW)

(74) Representative: Walter, Douglas Ernest et al,
HASELTINE LAKE & CO. 28, Southampton Buildings
London WC2A 1AT(GB)

(54) **Improvements relating to teaching methods and aids.**

(57) A teaching aid comprising a base (10) carrying a plurality of spaced, parallel ridges (12) which define channels (14) between neighbouring ridges (12). Each ridge (12) is of substantially inverted U-sectional shape so that the channels (14) are of substantially upright U-sectional shape but with the ridges (12) having sides which bulge into the adjoining channels (14). The aid also comprises a plurality of shorter pieces (18) which will clip slidably over the ridges (12) by way of resilient lips (22) and a plurality of longer pieces (20) which clip into the channels (14) by way of further resilient lips (22). Means comprising holes (24) and spigots (26) is provided to retain the pieces (20) in chosen positions and the tops of said pieces (18, 20) carry spigots (26) and/or letters, numbers or other indicia, and cards bearing further indicia can be releasably mounted between juxtaposed spigots (26).

FIG. 1

IMPROVEMENTS RELATING TO TEACHING METHODS AND AIDS

BACKGROUND TO THE INVENTION THIS invention relates to a teaching aid.

SUMMARY OF THE INVENTION

According to the invention there is provided a teaching aid comprising a base having a plurality of spaced parallel ridges which define channels between adjacent ridges, the ridges having an inverted U section and the channels having a corresponding U section and the ridges having sides which bulge outwardly into the adjacent channels; and a plurality of pieces adapted to engage releasably ridges or channels and to be retained on the ridges or in the channels by the bulges.

Preferably the pieces clip resiliently onto the ridges or into the channels.

In one embodiment the channels have spaced holes in their bases and the pieces which are adapted to engage cnannels have projections adapted to fit into the holes to prevent those pieces from sliding in the channels, with spigot-like projections on their upper surfaces adapted to engage edges of indicia-carrying cards, the cards being retained between the spigot-like projections of adjacent pieces.

Some of the pieces may carry indicia such as letters or numerals on their upper surfaces.

BRIEF DESCRIPTION OF THE DRAWINGS

Figure 1 is a perspective view of a teaching aid according to the invention, with two different kinds of removable pieces; and

Figure 2 shows the teaching aid with indicia-bearing elements retained thereon.

DESCRIPTION OF A PREFERRED EMBODIMENT

Referring to the drawings, the teaching aid has a base 10 which is formed with a number of parallel ridges 12 which have a generally inverted - U section and which are evenly spaced. The ridges 12 define channels 14 between adjacent ridges, the channels 14 having a U section. The walls of the ridges 12 are bowed outwardly and bulge into the channels 14. The base 10 is strengthened by a transverse clip-fit brace 16 which is clipped onto the base 10 over the ridges 12 at either edge of the base 10.

Two different kinds of removable pieces 18 and 20 are shown, which engage the base 10 by means of resilient lips 22. The short pieces 18 clip over the ridges 12, while the elongate pieces 20 clip into the channels 14. The pieces 18 can slide along the ridges 12.

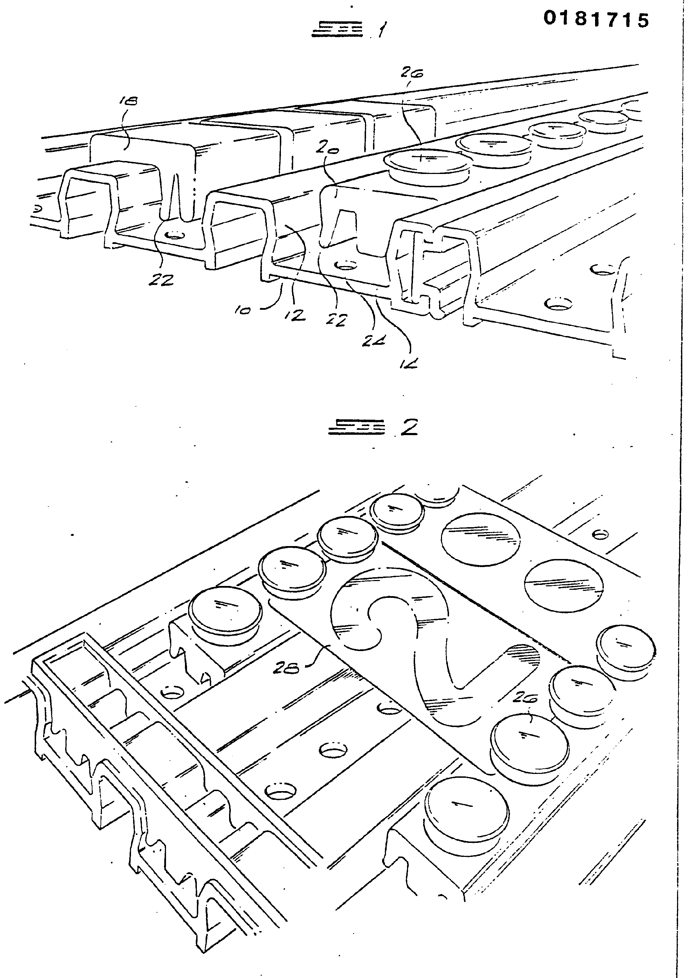

The bottoms of the channels are provided with spaced holes 24 into which spigots (not shown) on the underside of the pieces 20 fit. The holes in all the channels are aligned, so that the pieces 20 are aligned with other pieces 20 in adjacent channels. On the top of each piece 20 is a spigot 26. As shown in Figure 2, a card 28 of stiff material is retained between the spigots 26 of aligned pieces 20 in different channels by simply being snapped into position. The surface of the card 28 bears an indicium such as a letter, numeral, picture or the like. Thus, the teaching aid can be used to build up words, numerals or even, for example, a composite picture similar to a jigsaw puzzle.

The pieces 18 can also have letters or numerals on their upper surfaces. The letters or numerals can be provided on removable plastics strips or discs which are retained by clips on the top of the pieces 18, or simply printed or embossed on the pieces 18.

CLAIMS

1. A teaching aid comprising a base having a plurality of spaced parallel ridges which define channels between adjacent ridges, the ridges having an inverted U section and the channels having a corresponding U section and the ridges having sides which bulge outwardly into the adjacent channels; and a plurality of pieces adapted to engage releasably ridges or channels and to be retained on the ridges or in the channels by the bulges.

2. An aid according to claim 1 in whcih the pieces clip resiliently onto the ridges or into the channels.

3. An aid according to claim 1 or claim 2 in which the pieces which are adapted to engage ridges are slidable along the ridges.

4. An aid according to any one of claims 1 to 3 in which the channels have spaced holes in their bases and tne pieces which are adapted to engage channels have projections adapted to fit into the holes to prevent those pieces from sliding in the channels, with spigot-like projections on their upper surfaces adapted to engage edges of indicia-carrying cards, the cards being retained between the spigot-like projections of adjacent pieces.

5. An aid according to any one of claims 1 to 4 in which at least some of the pieces carry indicia on their upper surfaces.

6. An aid according to claim 4 or claim 5 in which the indicia are letters or numerals.

7. An aid according to claim 4 or claim 5 in which the indicia are pictures or parts of pictures.

8. An aid according to any one of claims 1 to 7 in which the base has an engaging formation on one edge and a complementary engaging formation on an opposite edge so that two or more bases can be attached to one another.

0181715

Fig. 1

Fig. 2

European Patent
Office

**EUROPEAN SEARCH REPORT**

0181715

Application number

EP 85 30 7573

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| Y | FR-A- 912 445 (A. MAIRE)<br><br>* figures 1,2 * | 1-3,5, 6 | G 09 B 1/06<br>G 09 F 7/02 |
| Y | GB-A-1 183 305 (SAN DIEGO AIRCRAFT ENGINEERING INC.)<br>* figure 5; claims 1,5,6; page 2, lines 26-29 * | 1-3,5, 6 | |
| A | GB-A-1 012 516 (H. BISHOP)<br>* figure 1; claim 1 * | 1,5-7 | |
| A | GB-A-1 441 381 (MARKPLAN SYSTEMS LTD.)<br>* figures 1,2; page 1, line 9 - page 2, line 90 * | 1-3 | |
| A | CH-A- 95 924 (C.P.V. MERCIER)<br><br>* figures 1-4 * | 1-3,5, 6 | TECHNICAL FIELDS SEARCHED (Int Cl 4) |
| A | FR-A-2 261 580 (J.-P. SCHMITT)<br>* figures 1-5 * | 1-3 | G 09 B 1/00<br>G 09 B 1/02<br>G 09 B 1/04<br>G 09 B 1/06<br>G 09 B 1/10<br>G 09 B 1/14<br>G 09 B 17/00<br>G 09 B 19/00<br>G 09 B 19/02<br>G 09 F 7/00<br>G 09 F 7/02<br>G 07 F 7/06<br>G 09 F 7/08 |

The present search report has been drawn up for all claims

| Place of search BERLIN | Date of completion of the search 15-01-1986 | Examiner ARENDT M |
|---|---|---|